# EUROPEAN PATENT SPECIFICATION

(11) **EP 3 380 356 B1**
(45) Date of publication and mention of the grant of the patent: **27.12.2023**
(21) Application number: 17708896.0
(22) Date of filing: 17.01.2017
(51) Int. Cl.: B60K 15/04

(54) **CAPLESS GASOLINE ONBOARD REFUELING VAPOR RECOVERY SYSTEM**
DAMPFRÜCKGEWINNUNGSSYSTEM FÜR SCHRAUBVERSCHLUSSLOSES BENZINAUFTANKEN AN BORD
SYSTÈME DE RÉCUPÉRATION DE VAPEUR DE RAVITAILLEMENT EMBARQUÉ POUR ESSENCE SANS BOUCHON

(43) Date of publication of application: 03.10.2018
(73) Proprietor: NOBEL GEMLIK OTOMOTIV SAN. VE TIC. A.S., 16600 Gemlik, Bursa (TR)
(72) Inventor: CHINTALAPATI, Ramakrishnam Raju, Hyderabad 500 090 (IN)
(74) Representative: Yamankaradeniz, Kemal
(86) International application number: PCT/TR2017/050026
(87) International publication number: WO 2018/136016

(56) References cited:
- EP-A2- 1 555 155
- WO-A1-96/33095
- US-A- 4 836 835
- US-B1- 6 691 750

## Description

### The Related Art

The invention relates to a capless ORVR (Onboard Refuelling Vapor Recovery) system.

The invention particularly relates to an ORVR system comprising a double-pivot flapper and a wave seal, and ensuring reduction of hydrocarbon outlet and sealing.

### The Prior Art

New emission regulations made it compulsory for all gasoline-powered vehicles to use ORVR system in order to control hydrocarbon outlet during fuelling.

Alternative solutions are needed to the commercially available single-hinged flapper design in order to improve sealing performance and reduce the size.

The capless ORVR systems of the prior art have a single-hinged flapper concept and the flappers open and close using a single axis. These capless ORVR systems require a large area at the filler head to allow accommodating a single-hinged flapper. These large filler heads are very expensive and require additional welding operations.

Again, the prior art capless systems do not have 100% capacity to meet ORVR requirements. This is because; the capless hole is large in order to allow the nozzle to enter the filler neck comfortably. Because of this large size, it is possible that the hydrocarbons may escape to the environment. To prevent this, there is a need for a robust sealing system comprising a rubber seal to seal off the nozzle outer surface before a second flapper opens.

Also in the prior art systems, when the fuel is being filled, the capless ORVR systems cause hydrocarbon escape from the filler neck, since they are not provided with a seal around the nozzle.

Also, because of the venturi effect, vacuum pressure builds up while the fuel is being filled. The air coming from the circulation pipe may not be sufficient to protect the negative pressure. This causes early closure. Therefore, additional air, which is called external air, is needed from the outside.

Also, in the prior art, a one-way valve, called an air discharge valve, is needed to allow entrance of atmospheric air. This valve helps releasing air to the filler neck from the outside, when the vacuum pressure is high due to venturi effect.

Also in the prior art, the mechanical seals are required to be expanded and compressed such that they would generate pressure force. Continuous pressure causes the mechanical seals to wear out or get loose from the ORVR system.

During fuelling, if the nozzle sensor does not stop filling of fuel, it would cause overfilling of the fuel tank and formation of excessive pressure in the tank. This causes damage to sensitive parts and the fuel may go through parts such as canisters. To prevent this situation, the operator has to notice that the fuel is overfilled and stop adding fuel. However, the wave seals found in capless ORVR systems do not allow seeing inside the filler neck.

The capless ORVR system needs to be quite compact in order to avoid large size and expensive filling head and metal source. Due to high durability requirements, the capless ORVR system requires better sealing performance such as high initial compression.

There is document number EP 1 555 155 A1 in the present technique. In this document, a filler neck closure assembly includes a housing formed to include a vent chamber arranged to receive a fuel-dispending pump nozzle therein during fuel tank refueling. In this document, there is a single pivot structure. So sealing part of valve doesn't distribute the force uniformly in a circular manner.

As a result, the above said drawbacks and the inadequacy of the prior art solutions about the subject have necessitated an improvement in the related technical field.

### Purpose of the Invention

The invention is formed with the inspiration from the prior art situations and aims to solve the above said problems.

The purpose of the invention is to have a two-hinged flapper in the capless ORVR system, wherein one of the hinges has a spherical joint to provide flexibility such that the spring load would be distributed equally on the seal.

Another purpose of the invention is to increase sealing. The capless ORVR system according to the invention incorporates a two-hinged flapper design allowing the flapper to open in a small area. This means that a small filler head can be used or a specific filler head is not required.

Another purpose of the invention is to allow a smaller size in the neck size by means of the double-hinged flapper.

Another purpose of the invention is to provide sealing through the spherical and flexible movement of the flappers.

Another purpose of the invention is to ensure that nozzle placement flapper rotation angle is much smaller than the single-hinged flapper design of the prior art thanks to the double-hinged flapper. This further improves sealing by increasing the initial spring compression.

Another purpose of the invention is to make the air evacuation wall from thin rubber which allows air to enter the filling tube through the medium when negative pressure occurs due to the venturi effect while fuel filling.

Another purpose of the invention is to make the wave seal of rubber with high flexing life and good wear resistance.

Another purpose of the invention is to ensure that the wave seal of the ORVR system has a malfunction nozzle discharge diaphragm which may be part of a wave seal at the lower side. When the pressurized fuel pushes this diaphragm out, the diaphragm wall can bend outward (like a one-way valve). This diaphragm wall is called as the "malfunction nozzle discharge valve". When high pressure is present from inside and the cap pressure generates enough force to lift the diaphragm wall from its bed, the malfunction nozzle discharge wall diaphragm provides flow in forward direction, and thus unidirectional flow in the determined pressure will be provided. For the malfunction nozzles, the fuel exiting the exhaust wall can be seen by the operator.

Another purpose of the invention is to allow the capless ORVR system to have a metal fuel pipe installation without any welding. This increases corrosion resistance and greatly reduces the part price. Moreover, it prevents expensive resource investments.

Another purpose of the invention is to allow the capless ORVR system to provide a separate external flapper mechanism connected by a snap fastener and an internal flapper mechanism. At the moment of impact, the external flapper system snap fasteners are easily separated from the metal filler head and do not damage the integral flapper mechanism. This prevents leakage from the inner flapper at the filler head.

In order to achieve the above said purposes, the invention is a system ensuring sealing and preventing outlet of hydrocarbons in gasoline onboard refueling vapor recovery systems comprising:
- a front body guiding the nozzle during fuelling and preventing outlet of excess fuel,
- a primary flapper allowing opening and closing of the outer nozzle receiver opening by moving together with the cap,
- a primary door-seal connected to the front body so as to close the fuel tank filler neck and ensuring insulation by being positioned between the front body and the primary flapper,
- at least one spring-1 allowing the opening and closing movement of the primary flapper during fuelling,
- an outer body,
- a secondary housing connected to the front body and removed from the outer body when the front body receives an impact,
- at least one pin fixed on the secondary housing so as to allow movement of the primary flapper around the axis thereof during opening and closing movements,
- a nozzle guide guiding the nozzle during fuelling,
- a plunger that allows air intake from outside, by coming to a lower position when the air pressure is reduced in filling tube,
- a valve cap that keeps the plunger in the cylinder during movement,
- at least one spring-2 that is compressed or loosened according to the movement of the plunger, characterized in further comprising:
- at least one lever primary allowing equal distribution of the compression load of said spring-1 to all sealing areas via at least one spherical joint, improving sealing;
- a wave seal preventing outlet of hydrocarbons by means of surrounding the nozzle while the nozzle is being placed, allowing uni-directional flow to continue and preventing backflow when there is pressure in the opposite direction from within, allowing the fuel to exit through the filler neck by being bent outwards.

The invention can further comprise:
a secondary flapper connected to said outer body and providing sealing by moving in the axis of said pin via said spring-1, and a secondary door-seal providing sealing through connection with said secondary flapper.

The structural and characteristic features of the invention and all of its advantages shall be understood better with the figures and the detailed description given below in reference to the figures, and therefore, the assessment should be made by taking into account the said figures and detailed explanations.

### Figures for Better Understanding of the Invention

**Figure 1**, is a demounted view of a preferred embodiment of the capless gasoline onboard refueling vapor recovery system according to the invention.

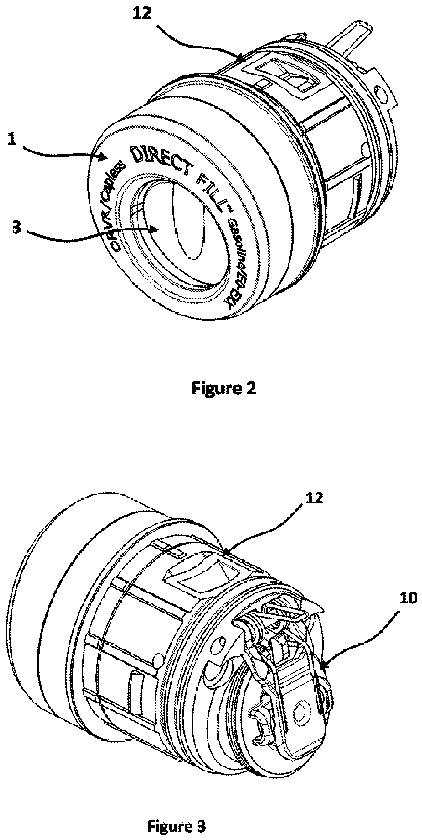

**Figure 2****,** is a mounted view of a preferred embodiment of the capless gasoline onboard refueling vapor recovery system according to the invention.
**Figure 3****,** is a three-dimensional front view of a preferred embodiment of the capless gasoline onboard refueling vapor recovery system according to the invention.

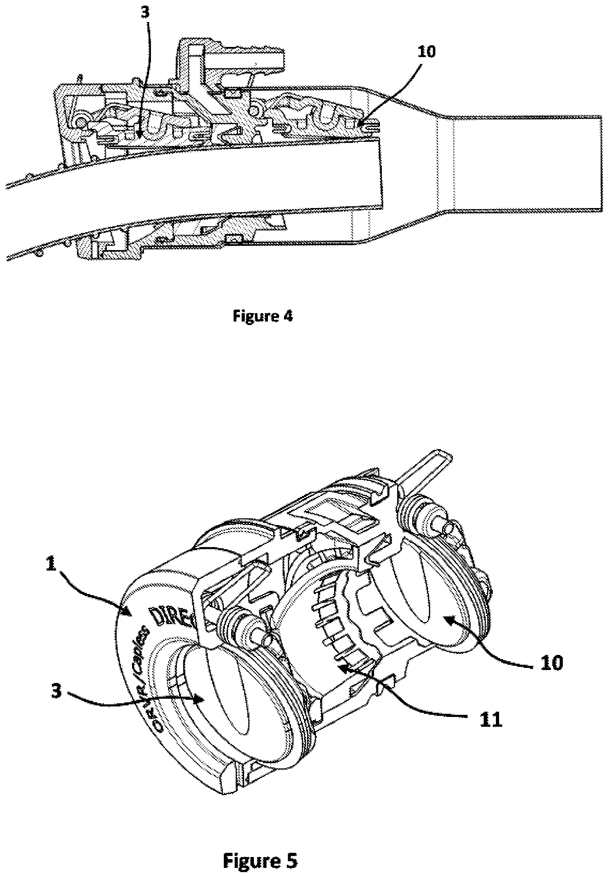

**Figure 4****,** is a side section view of a preferred embodiment of the capless gasoline onboard refueling vapor recovery system according to the invention.
**Figure 5****,** is a side perspective view of a preferred embodiment of the capless gasoline onboard refueling vapor recovery system according to the invention.

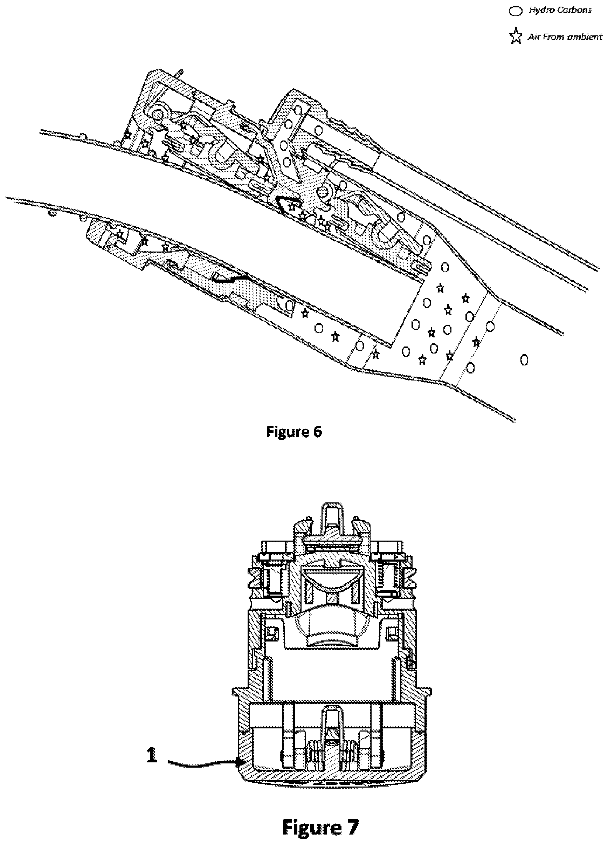

**Figure 6****,** is a hydrocarbon outer view of a preferred embodiment of the capless gasoline onboard refueling vapor recovery system according to the invention.
**Figure 7****,** is top section view of a preferred embodiment of the capless gasoline onboard refueling vapor recovery system according to the invention.
**Description of Parts References**
   1. Front body
   2. Primary door-seal
   3. Primary flapper
   4. Lever primary
   5. Spring-1
   6. Secondary housing
   7. Pin
   8. Front seal
   9. Nozzle guide
   10. Secondary flapper
   11.Wave seal
   12.Outer body
   13.Back seal
   14.Vacuum seal
   15.Valve cap
   16.Spring-2
   17.Plunger
   18.Secondary door-seal

Drawings do not have to be scaled and details not necessary for understanding the present invention may be neglected. Moreover, components which are at least widely equal or which have at least widely equal functions are shown with the same number.

### Detailed Description of the Invention

In this detailed description, the preferred embodiments of the capless ORVR system according to the present invention, will only be disclosed for better understanding of the subject.

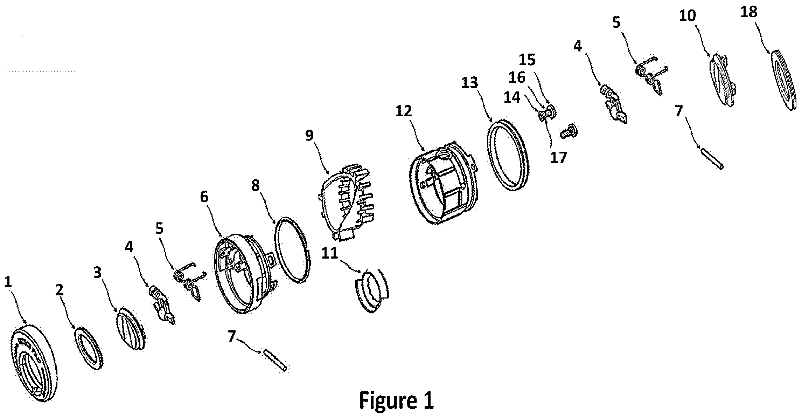

As can be seen in Figure 1, the invention is a system ensuring sealing and preventing outlet of hydrocarbons in capless gasoline onboard refueling vapor recovery systems, and it is characterized in that; it comprises:
- a front body (1) guiding the nozzle during fuelling and preventing outlet of excess fuel,
- a primary flapper (3) allowing opening and closing of the outer nozzle receiver opening by moving together with the cap,
- a primary door-seal connected to the front body so as to close the fuel tank filler neck and ensuring insulation by being positioned between the front body and the primary flapper,
- at least one spring-1 (5) allowing the opening and closing movement of the primary flapper (3) during fuelling,
- at least one lever primary (4) allowing equal distribution of the compression load of said spring-1 (5) to all sealing areas via at least one spherical joint, improving sealing;
- an outer body (12),
- a secondary housing (6) connected to the front body (1) and removed from the outer body (12) when the front body (1) receives an impact,
- at least one pin (7) fixed on the secondary housing (6) so as to allow movement of the primary flapper (3) around the axis thereof during opening and closing movements,
- a nozzle guide (9) guiding the nozzle during fuelling,
- a plunger (17) that allows air intake from outside, by coming to a lower position when the air pressure is reduced,
- a valve cap (15) that keeps the plunger (17) in a cylinder during movement,
- at least one spring-2 (16) that is compressed or loosened according to the movement of the plunger (17),
- a secondary flapper (10) connected to the outer body (12) and providing sealing by moving in the axis of the pin (7) via spring-1 (5),
- a secondary door-seal (18) providing sealing through connection with the secondary flapper (10),
- a wave seal (11)
   ✔ preventing outlet of hydrocarbons by means of surrounding the nozzle while the nozzle is being placed,
   ✔ allowing uni-directional flow to continue and preventing backflow when there is pressure in the opposite direction from within,
   ✔ allowing the fuel to exit through the filler neck by being bent outwards.

The components shown in figure 1 and found in the demounted state of the invention and their functions are as follows:
- Front body (1) is an appearance body which guide nozzle while refueling. Front body (1) has evacuation feature is available which allows excess fuel to go outside.
- Primary door-seal (2) was typically used to close the open end of a fuel tank filler neck. The fuel cap is attached to the front body (1) so that forms a seal between the fuel cap primary door-seal (2) and the front body (1). Thus, the fuel cap closes the open end of the front body (1) to block discharge of liquid fuel and fuel vapor from the fuel tank through the front body (1).
- Primary flapper (3) is an appearance door mounted for movement relative to cover to open and close outer nozzle-receiving aperture. If the diameter of the object is larger than the correct diameter, the object will touch the latches so the flapper door will be released. But the diameter of the hole of the outer body (12) only allows the insertion of correct nozzles, that is, the diameter of the hole will be 22 mm for petrol cars and 26 mm for diesel ones. So larger objects could not be inserted.
- Lever primary (4) will rotate to certain angle after that it will oscillate according condition. Spherical movement of lever primary (4) will distribute the compression load equally to all around sealing area. This will improve the sealing performance and avoid leakage issues due to dual pivot-flapper needs smaller rotational angle for nozzle insertion. So the initial spring 1 (5) compression will be kept higher ve the sealing performance will be improved significantly.
- Metallic spring 1 (5) drive primary flapper (3). Primary flapper (3) is connect with spring 1 (5) to ensure sealing while opening and closing conditions of primary flapper (3) when nozzle is inserted during refueling.
- The secondary housing (6) includes a portion that remains coupled to front body (1). When front body (1) is blowed/hit, front body (1) and secondary housing (6) will separates from the outer body (12) at break away condition.
- Pin (7) is fixed in secondary housing (6). Primary flapper (3) is rotated axially about the axis of pin (7) during opening and closing conditions.
- Front seal (8) acts as leak proof between secondary housing (6) and outer body (12).
- Nozzle guide (9) will guide the gun while refueling.
- Secondary flapper (10), is an appearance door as primary flapper (3).
- Outer body (12) is coupled with secondary housing (6) by snaps feature which help in breakaway test. Secondary flapper (10) is also connected to outer body (12) for better leak protection.
- Back seal (13) will act as leak proof between outer body (12) and filler pipe.
- Vacuum seal (14) acts as leak proof which stop escaping tank pressure to outside.
- Valve cap (15) will hold plunger (17) assy during its motion condition.
- Spring-2 (16) compress according to movement to plunger (17).
- Plunger (17) comes down to take air from outside to ORVR system when pressure of the air decreases.
- Wave seal (11) consists three functions for capless ORVR system:
   1. Insulation of nozzle outer surface: While the nozzle is being placed, the wave seal (11) surrounds the nozzle before the secondary flapper (10) is opened and thus prevents hydrocarbons from escaping into the atmosphere. Due to its wavy structure, the wave seal (11) is easily opened without any tension or squeezing on the insertion hole shape. The rubber with wavy structure does not have to be expanded. In this way, expansion and compression pressure is not encountered.
   2. Air discharge diaphragm valve: If the fuel filling rate is high, negative pressure builds up in the filler neck due to the venturi effect of the liquid flow. Existing vapor coming from the circulation may not be sufficient for protecting the internal pressure. To prevent early closing, additional air, called external air, is needed from the environment. When high negative pressure is present from inside and the cap pressure generates enough force to lift the diaphragm wall from its bed, the air discharge diaphragm valve (wave seal (11)) provides flow in forward direction, which is unidirectional flow in the determined pressure. In this way, the wave seal (11) instantly prevent backflow. In this case, hydrocarbons cannot go out (98% efficiency).
   3. Malfunction nozzle discharge diaphragm valve: Within the filler neck, the malfunction nozzle discharge diaphragm valve opens (bends) outward due to the pressurized pipe._After the malfunction nozzle discharge diaphragm is opened, it generates an opening that allows outlet of the fuel through the filler neck.

## Claims

1. A system ensuring sealing and preventing outlet of hydrocarbons in capless gasoline onboard refueling vapor recovery systems comprises:
• a front body (1) guiding the nozzle during fuelling and preventing outlet of excess fuel,
• a primary flapper (3) allowing opening and closing of the outer nozzle receiver opening by moving together with the cap,
• at least one spring-1 (5) allowing the opening and closing movement of said primary flapper (3) during fuelling,
• an outer body (12),
• a secondary housing (6) connected to said front body (1) and removed from the outer body (12) when there is an impact on the front body (1),
• at least one pin (7) fixed on said secondary housing (6) so as to allow movement of said primary flapper (3) around the axis thereof during opening and closing movements,
• a nozzle guide (9) guiding the nozzle during fuelling,
• a plunger (17) that allows air intake from outside, by coming to a lower position when the air pressure is reduced in filling tube ,
• a valve cap (15) that keeps the plunger (17) in a cylinder during movement,
• at least one spring-2 (16) that is compressed or loosened according to the movement of the plunger (17)
**characterized in** further comprising:
• at least one lever primary (4) allowing equal distribution of the compression load of said spring-1 (5) to all sealing areas via at least one spherical joint, improving sealing;
• a wave seal (11)
✔ preventing outlet of hydrocarbons by means of surrounding the nozzle while the nozzle is being placed,
✔ allowing uni-directional flow to continue and preventing backflow when there is pressure in the opposite direction from within,
✔ allowing the fuel to exit through the filler neck by being bent outwards.

2. The system according to Claim 1, **characterized in that**; it comprises a primary door-seal (2) connected to said front body (1) so as to close the fuel tank filler neck and ensuring insulation by being positioned between the front body (1) and said primary flapper (3).

3. The system according to Claim 1, **characterized in that**; it comprises a front seal (8) ensuring sealing between said secondary housing (6) and said outer body (12).

4. The system according to Claim 1, **characterized in that**; it comprises a back seal (13) ensuring sealing between the outer body (12) and the nozzle.

5. The system according to Claim 1, **characterized in that**; it comprises a vacuum seal (14) preventing the pressure of the fuel tank from getting outside and providing sealing.

6. The system according to Claim 1, **characterized in that**; said wave seal (11) is made of rubber.

7. The system according to Claim 1, **characterized in that**; said wave seal (11) has a wavy form.

8. The system according to Claim 1, **characterized in that**; it comprises a secondary flapper (10) connected to said outer body (12) and providing sealing by moving in the axis of said pin (7) via said spring-1 (5).

9. The system according to claim 8, **characterized in that**; it comprises a secondary door-seal (18) providing sealing through connection with said secondary flapper (10).

## Patentansprüche

1. System, das in Dampfrückgewinnungssystemen für kappenloses Benzinauftanken an Bord Abdichtung sicherstellt und Auslass von Kohlenwasserstoffen verhindert, umfasst:
• einen vorderen Körper (1), der die Zapfpistole während des Betankens führt und Auslass von überschüssigem Kraftstoff verhindert,
• eine primäre Klappe (3), die Öffnen und Schließen der äußeren Zapfpistolenaufnahmeöffnung durch Bewegen zusammen mit der Kappe ermöglicht,
• mindestens eine Feder-1 (5), die die Öffnungs- und Schließbewegung der primären Klappe (3) während des Betankens ermöglicht,
• einen äußeren Körper (12),
• ein sekundäres Gehäuse (6), das mit dem vorderen Körper (1) verbunden ist und von dem äußeren Körper (12) entfernt wird, wenn es einen Aufprall auf den vorderen Körper (1) gibt,
• mindestens einen Stift (7), der an dem sekundären Gehäuse (6) befestigt ist, um eine Bewegung der primären Klappe (3) um die Achse davon während Öffnungs- und Schließbewegungen zu ermöglichen,
• eine Zapfpistolenführung (9), die die Zapfpistole während des Betankens führt,
• einen Kolben (17), der Luftansaugung von außen ermöglicht, indem er in eine niedrigere Position kommt, wenn der Luftdruck in dem Einfüllrohr reduziert wird,
• eine Ventilkappe (15), die den Kolben (17) während der Bewegung in einem Zylinder hält,
• mindestens eine Feder-2 (16), die gemäß der Bewegung des Kolbens (17) zusammengedrückt oder gelockert wird,
**dadurch gekennzeichnet, dass** es ferner Folgendes umfasst:
• mindestens einen primären Hebel (4), der über mindestens ein Kugelgelenk eine gleichmäßige Verteilung der Drucklast der Feder-1 (5) auf alle Dichtungsflächen ermöglicht, was die Abdichtung verbessert;
• eine Wellendichtung (11),
✔ die Auslass von Kohlenwasserstoffen mittels Umgeben der Zapfpistole verhindert, während die Zapfpistole platziert wird,
✔ die ermöglicht, dass unidirektionaler Fluss fortgesetzt wird, und Rückfluss verhindert, wenn es Druck in der entgegengesetzten Richtung von innen gibt,
✔ die ermöglicht, dass der Kraftstoff durch den Einfüllstutzen austritt, indem sie nach außen gebogen wird.

2. System gemäß Anspruch 1, **dadurch gekennzeichnet, dass**; es eine primäre Türdichtung (2) umfasst, die mit dem vorderen Körper (1) verbunden ist, um den Krafstofftankeinfüllstutzen zu verschließen und Isolierung sicherzustellen, indem sie zwischen dem vorderen Körper (1) und der primären Klappe (3) positioniert ist.

3. System gemäß Anspruch 1, **dadurch gekennzeichnet, dass**; es eine vordere Dichtung (8) umfasst, die Abdichtung zwischen dem sekundären Gehäuse (6) und dem äußeren Körper (12) sicherstellt.

4. System gemäß Anspruch 1, **dadurch gekennzeichnet, dass**; es eine hintere Dichtung (13) umfasst, die Abdichtung zwischen dem äußeren Körper (12) und der Zapfpistole sicherstellt.

5. System gemäß Anspruch 1, **dadurch gekennzeichnet, dass**; es eine Vakuumdichtung (14) umfasst, die verhindert, dass der Druck des Kraftstofftanks nach außen gelangt, und Abdichtung bereitstellt.

6. System gemäß Anspruch 1, **dadurch gekennzeichnet, dass**; die Wellendichtung (11) aus Gummi gefertigt ist.

7. System gemäß Anspruch 1, **dadurch gekennzeichnet, dass**; die Wellendichtung (11) eine wellige Form aufweist.

8. System gemäß Anspruch 1, **dadurch gekennzeichnet, dass**; es eine sekundäre Klappe (10) umfasst, die mit dem äußeren Körper (12) verbunden ist und Abdichtung durch Bewegen in der Achse des Stifts (7) über die Feder-1 (5) bereitstellt.

9. System gemäß Anspruch 8, **dadurch gekennzeichnet, dass**; es eine sekundäre Türdichtung (18) umfasst, die durch Verbindung mit der sekundären Klappe (10) Abdichtung bereitstellt.

## Revendications

1. Système assurant l'étanchéité et empêchant la sortie d'hydrocarbures dans des systèmes de récupération des vapeurs de ravitaillement en carburant embarqué sans bouchon, comprenant :
• un corps avant (1) guidant la buse pendant le ravitaillement et empêchant la sortie de l'excès de carburant,
• un clapet primaire (3) permettant l'ouverture et la fermeture de l'ouverture externe du récepteur de buse en se déplaçant conjointement au bouchon,
• au moins un ressort-1 (5) permettant le mouvement d'ouverture et de fermeture dudit clapet primaire (3) pendant le ravitaillement,
• un corps extérieur (12),
• un boîtier secondaire (6) relié audit corps avant (1) et retiré du corps extérieur (12) lorsqu'il y a un impact sur le corps avant (1),
• au moins une goupille (7) fixée sur ledit boîtier secondaire (6) de manière à permettre le déplacement dudit clapet primaire (3) autour de l'axe de celle-ci lors des mouvements d'ouverture et de fermeture,
• un guide de buse (9) guidant la buse pendant le ravitaillement,
• un piston (17) qui permet l'admission d'air depuis l'extérieur, en venant en position basse lorsque la pression de l'air diminue dans le tube de remplissage,
• un bouchon de valve (15) qui maintient le piston (17) dans un cylindre pendant le mouvement,
• au moins un ressort-2 (16) qui est comprimé ou desserré en fonction du mouvement du piston (17)
**caractérisé en ce qu'**il comprend en outre :
• au moins un levier primaire (4) permettant une répartition égale de la charge de compression dudit ressort-1 (5) sur toutes les zones d'étanchéité via au moins un joint sphérique, améliorant l'étanchéité ;
• un joint ondulé (11)
✔ empêchant la sortie d'hydrocarbures du fait qu'il entoure la buse tandis que la buse est mise en place,
✔ permettant au flux unidirectionnel de poursuivre et empêchant le reflux lorsqu'il y a une pression dans la direction opposée depuis l'intérieur,
✔ permettant au carburant de sortir par le goulot de remplissage en étant courbé vers l'extérieur.

2. Système selon la revendication 1, **caractérisé en ce que** ; il comprend un joint de porte primaire (2) relié audit corps avant (1) de manière à fermer le goulot de remplissage du réservoir de carburant et assurant l'isolation en étant positionné entre le corps avant (1) et ledit clapet primaire (3).

3. Système selon la revendication 1, **caractérisé en ce que** ; il comprend un joint frontal (8) assurant l'étanchéité entre ledit boîtier secondaire (6) et ledit corps extérieur (12).

4. Système selon la revendication 1, **caractérisé en ce que** ; il comprend un joint arrière (13) assurant l'étanchéité entre le corps extérieur (12) et la buse.

5. Système selon la revendication 1, **caractérisé en ce que** ; il comprend un joint sous vide (14) empêchant la pression du réservoir de carburant de sortir et assurant l'étanchéité.

6. Système selon la revendication 1, **caractérisé en ce que** ; ledit joint ondulé (11) est en caoutchouc.

7. Système selon la revendication 1, **caractérisé en ce que** ; ledit joint ondulé (11) comporte une forme ondulée.

8. Système selon la revendication 1, **caractérisé en ce que** ; il comprend un clapet secondaire (10) relié audit corps extérieur (12) et assurant l'étanchéité par déplacement dans ladite goupille (7) via ledit ressort-1 (5).

9. Système selon la revendication 8, **caractérisé en ce que** ; il comprend un joint de porte secondaire (18) assurant l'étanchéité par liaison avec ledit clapet secondaire (10).
